# FASCICULE DE BREVET EUROPEEN

(11) **EP 3 442 741 B1**
(45) Date de publication et mention de la délivrance du brevet: **21.10.2020**
(21) Numéro de dépôt: 17720201.7
(22) Date de dépôt: 10.04.2017
(51) Int. Cl.: B23P 15/04, B21D 53/78, C23C 8/02, C23C 8/36, C23C 8/80, C23C 8/30, F01D 5/14

(54) **NOYAU DE CONFORMATION À CHAUD D'UNE PIÈCE MÉTALLIQUE ET PROCÉDÉ DE FABRICATION**
KERN FÜR HOCHTEMPERATURFORMEN EINES METALLTEILS UND HERSTELLUNGSVERFAHREN
CORE FOR HIGH-TEMPERATURE SHAPING OF A METAL PART AND MANUFACTURING PROCESS

(30) Priorité: 12.04.2016 FR 1653221
(43) Date de publication de la demande: 20.02.2019
(73) Titulaire: Safran Aircraft Engines, 75015 Paris (FR); Safran, 75015 Paris (FR); Centre National de la Recherche Scientifique, 75016 Paris (FR)
(72) Inventeur: KLEIN, Gilles Charles Casimir, 77550 MOISSY-CRAMAYEL CEDEX (FR); FRANCHET, Jean-Michel Patrick Maurice, 77550 MOISSY-CRAMAYEL CEDEX (FR); LEPETITCORPS, Yann, 33850 LEOGNAN (FR); ROGER, Jérôme, 33600 PESSAC (FR); SERGENT, Benoît, 33600 PESSAC (FR)
(74) Mandataire: Cabinet Beau de Loménie
(86) Numéro de dépôt international: PCT/FR2017/050851
(87) Numéro de publication internationale: WO 2017/178742

(56) Documents cités:
- EP-A1- 1 500 444
- WO-A1-2011/114073
- JP-A- 2001 025 843
- JP-A- 2009 061 464

## Description

La présente invention concerne la fabrication d'une pièce métallique en alliage à base de titane, telle qu'un bouclier de bord d'attaque d'une aube de turbine.

De tels boucliers de bord d'attaque sont typiquement destinés à protéger les bords d'attaque d'aubes tournantes contre les impacts. On entend par « aubes », dans ce contexte, tant les aubes de soufflante que les pales d'hélice aérienne. Afin de limiter leur poids, ces aubes sont typiquement en composite à matrice en polymère renforcée par des fibres. Bien que ces matériaux présentent des qualités mécaniques généralement très favorables, en particulier par rapport à leur masse, ils sont particulièrement sensibles aux impacts ponctuels, qui peuvent générer notamment des phénomènes de délaminage au sein du matériau. Des boucliers, typiquement en matériau métallique hautement résistant, comme les alliages de titane, sont donc normalement installés sur les bords d'attaque de telles aubes, afin de les protéger contre ces impacts. Ces boucliers prennent normalement la forme d'une fine ailette intrados et une fine ailette extrados jointes par une section plus épaisse chevauchant le bord d'attaque, l'ensemble épousant la forme de l'aube sur le bord d'attaque et des sections adjacentes de l'intrados et de l'extrados. Les ailettes intrados et extrados s'étendent sur ces sections de, respectivement, l'intrados et l'extrados de l'aube, et servent principalement à assurer le positionnement et la fixation du bouclier sur le bord d'attaque.

Afin d'améliorer les performances aérodynamiques des aubes, leur bord d'attaque présente des formes de plus en plus complexes, ce qui complique la fabrication des boucliers devant épouser ces formes.

Dans un procédé, le bouclier est fabriqué principalement par forgeage à partir d'une barre d'alliage, avec des étapes successives de cambrage, bourrage et filage, avec une étape finale de vrillage pour rapprocher les ailettes et calibrer la section plus épaisse. L'application de ce procédé connu à des matériaux aussi résistants que les alliages de titane typiquement employés pour les boucliers de bord d'attaque présente toutefois des inconvénients importants : des coûts élevés de fabrication dus à une usure importante des outils de forgeage et à un nombre important d'étapes de fabrication et des inconvénients techniques dus à une grande difficulté pour obtenir des épaisseurs très fines pour les ailettes ou des petits rayons de transition entre les ailettes et la section plus épaisse.

Le document WO2011/114073 décrit un procédé de formage à chaud d'un bouclier autour d'un noyau. Ce noyau peut éventuellement être recouvert d'une barrière anti-diffusion composée d'une couche d'oxyde d'yttrium. Cependant, cette couche d'oxyde d'yttrium doit être déposée par dépôt plasma. Cette technique a un coût relativement élevé et il peut s'avérer difficile d'obtenir une couche uniforme sur toute la surface extérieure du noyau. En effet, la forme de plus en plus complexe des aubes et donc des bords d'attaque de ces aubes rend également de plus en plus complexe la forme du noyau sur lequel le bord d'attaque est conformé. Ledit document décrit un noyau métallique selon le préambule de la revendication 1.

Par ailleurs, il s'avère que la couche d'oxyde d'yttrium se dégrade relativement rapidement ce qui restreint les possibilités de réutilisation du noyau. Aussi, le coût d'un tel procédé est relativement élevé.

### Objet et résumé de l'invention

La présente invention vise à remédier à ces inconvénients.

A cet effet, l'invention a pour objet un noyau métallique pour conformation à chaud d'une pièce métallique à base de titane, le noyau métallique comprenant un alliage à base de nickel ou de cobalt et l'alliage à base de nickel ou de cobalt comprenant du chrome, du molybdène et/ou du titane et le noyau métallique présentant en outre sur une surface extérieure, destinée à venir en contact avec la pièce métallique, une couche comprenant un matériau enrichi en carbonitrure métallique par rapport audit alliage.

Grâce au noyau métallique comprenant un alliage à base de nickel ou de cobalt, il est possible de conformer à chaud une pièce métallique en alliage à base de titane, telle qu'une pièce métallique destinée à former un bord d'attaque d'une aube tournante. Cette conformation à chaud permet, par déformation plastique à chaud de la pièce métallique, de fabriquer une pièce de géométrie tridimensionnelle complexe même au départ de tôles particulièrement rigides qui présente des propriétés physiques particulièrement avantageuses, notamment une grande résistance à la fatigue. En effet, les alliages à base de nickel ou de cobalt ne se déforment pas ou peu à des températures élevées, par exemple 1000°C.

Par ailleurs, grâce à la couche de matériau enrichi en carbonitrure métallique présente en surface extérieure du noyau métallique destinée à venir en contact avec la pièce métallique, après la conformation à chaud de la pièce métallique sur le noyau métallique, le noyau métallique et la pièce métallique peuvent être séparés de manière aisée. En effet, lors de l'étape de conformation à chaud, il n'y a pas de collage et/ou de réaction chimique entre le noyau métallique et la pièce métallique. En effet, la pièce métallique est en contact avec la couche de matériau enrichi en carbonitrure métallique et non avec l'alliage à base de nickel ou de cobalt formant le noyau métallique.

Cette couche de matériau enrichi en carbonitrure métallique est inerte chimiquement et physiquement vis-à-vis de la pièce métallique. Cette couche, de par la dispersion de carbures et nitrures forme une barrière de diffusion entre l'alliage du noyau métallique et l'alliage à base de titane de la pièce métallique. On limite ainsi la contamination de la pièce métallique en alliage à base de titane par des éléments de l'alliage à base de nickel ou de cobalt du noyau métallique.

Grâce également au fait que l'alliage à base nickel ou de cobalt comprenne du chrome, du molybdène et/ou du titane, la couche de matériau enrichi en carbonitrure métallique formée en surface du noyau métallique est stable à haute température, notamment thermodynamiquement. On notera que plus la teneur massique en chrome, molybdène et/ou titane est élevée, plus la couche de matériau enrichi en carbonitrure métallique est stable.

Ainsi, le noyau métallique peut être utilisé pour conformer à chaud la pièce métallique en lui donnant une forme de géométrie tridimensionnelle complexe ne nécessitant pas ou peu, après retrait du noyau métallique, d'usinage de la surface de la pièce métallique qui a été en contact avec le noyau métallique. Ce noyau métallique présentant une surface inerte vis-à-vis de la pièce métallique peut être utilisé pour conformer à chaud successivement plusieurs pièces métalliques. Le noyau métallique est donc un outil qui est utilisé pour la fabrication de plusieurs pièces métalliques et non un consommable qui n'est utilisé que pour former une seule pièce métallique.

On entend par alliage à base de titane, des alliages dont la teneur massique en titane est majoritaire. On comprend que le titane est donc l'élément dont la teneur massique dans l'alliage est la plus élevée. Avantageusement, l'alliage à base de titane a une teneur massique d'au moins 50% de titane, de préférence d'au moins 70% de titane, encore plus préférentiellement d'au moins 80% de titane. De la même manière, on entend par alliage à base de nickel ou de cobalt, des alliages métalliques dont la teneur massique en nickel ou en cobalt est majoritaire. Ainsi, l'alliage à base de nickel ou de cobalt pourra avoir une teneur massique en nickel ou en cobalt d'au moins 40%, de préférence 50%.

Le matériau enrichi en carbonitrure métallique peut être obtenu par diffusion, dans un alliage métallique, d'atomes de carbone et d'azote. Ces atomes de carbone et d'azote réagissent avec les atomes de l'alliage métallique pour former une couche de matériau qui comprend des atomes de l'alliage métallique de départ liés à des atomes de carbone et/ou d'azote. Cette couche peut comprendre des carbures, des nitrures et/ou des carbonitrures métalliques dont les compositions chimiques et pondérales peuvent varier en fonction de l'emplacement où elles sont mesurées dans cette couche. On comprend que cette couche peut également comprendre des atomes de l'alliage métallique d'origine non liés à des atomes de carbone ou d'azote.

La couche de matériau enrichi en carbonitrure métallique peut comprendre une première couche et une seconde couche, la première couche comprenant une plus grande concentration de nitrure métallique que la seconde couche, la seconde couche étant séparée de la surface extérieure du noyau métallique par la première couche.

Le carbone ayant une mobilité plus élevée que l'azote dans les alliages à base de nickel ou de cobalt, il peut diffuser sur une épaisseur plus importante que l'azote sur une période de temps donnée. Le choix combiné du carbone et de l'azote permet de former un composé stable thermodynamiquement, par exemple sur une épaisseur supérieure à environ 20 µm, de préférence supérieure à 30 µm.

La couche de matériau enrichi en carbonitrure métallique peut présenter une épaisseur d'au moins 20 µm, de préférence d'au moins 30 µm.

Ainsi, la couche de matériau enrichi en carbonitrure métallique est suffisamment épaisse que pour que le noyau puisse être utilisé au moins 10 fois, voire 30 ou 50 fois. Cette réutilisation importante du noyau métallique permet de réduire les coûts de production des bords d'attaque de manière très significative.

L'invention concerne également un procédé de fabrication d'un noyau métallique tel que défini ci-dessus, comprenant les étapes suivantes :
fabrication du noyau métallique ; et
carbonitruration de la surface extérieure du noyau métallique de sorte à obtenir une couche de matériau enrichi en carbonitrure métallique.

En contrôlant la thermodynamique de la carbonitruration, il est possible de favoriser la formation de certains nitrures, carbures et/ou carbonitrures Parmi tous les éléments métalliques présents dans l'alliage, certains éléments forment des carbures, par exemple, le chrome, le fer, le molybdène, le tungstène, le titane, le tantale, le niobium et l'aluminium, d'autres forment des nitrures, par exemple, le chrome, le fer, le molybdène, le tungstène, le titane, le tantale, le niobium et l'aluminium et certains de ces éléments forment des carbonitrures, notamment le titane, le tantale et le fer. Le nickel et le cobalt sont des éléments métalliques neutres par rapport au carbone et à l'azote, de sorte qu'ils ne se lient pas avec le carbone et/ou l'azote pour former des nitrures, des carbures et/ou des carbonitrures. Par ailleurs, la profondeur de diffusion du carbone et de l'azote est contrôlée par la cinétique de la réaction, par exemple en modifiant la température de carbonitruration.

La carbonitruration peut être réalisée en bain de sels fondus, sous atmosphère gazeuse.

La carbonitruration de la surface extérieure du noyau métallique peut notamment être réalisée par formation d'un plasma de carbone et d'azote. Cette technique aussi appelée carbonitruration ionique ou carbonitruration plasma est une technique réactive qui permet de faire diffuser le carbone et l'azote en profondeur. En faisant varier la température, il est possible de contrôler l'épaisseur de la couche de matériau enrichi en carbonitrure métallique formée à la surface du noyau métallique.

L'invention a également pour objet un procédé de régénération d'un noyau métallique tel que défini précédemment, dans lequel on réalise une nouvelle étape de carbonitruration de la surface extérieure du noyau métallique, de sorte à obtenir une nouvelle couche de matériau enrichi en carbonitrure métallique.

Ainsi, lorsqu'après plusieurs utilisations du noyau métallique, par exemple 10 utilisations, de préférence 30 utilisations, encore plus préférentiellement 50 utilisations, la couche de matériau enrichi en carbonitrure métallique se dégrade, il est possible de réaliser une nouvelle étape de carbonitruration. Cela permet donc de prolonger la durée de vie du noyau métallique.

Avant la nouvelle étape de carbonitruration de la surface extérieure du noyau métallique, on peut réaliser une étape d'élimination de la couche de matériau enrichi en carbonitrure métallique par traitement thermique. Typiquement, cette étape est réalisée à une température supérieure à la température de conformation à chaud de la pièce métallique.

L'invention a aussi pour objet un procédé de conformation à chaud d'une pièce métallique en alliage à base de titane, comprenant les étapes suivantes :
- positionnement de la pièce métallique autour d'un noyau métallique tel que défini précédemment ;
- conformation à chaud de la pièce métallique autour du noyau ; et
- extraction du noyau.

Ainsi, grâce à l'utilisation d'un noyau métallique présentant, en surface, une couche de matériau enrichi en carbonitrure métallique, une pièce métallique en alliage à base de titane peut être fabriquée par conformation à chaud sans collage du noyau métallique et de la pièce métallique et sans contamination de la pièce métallique par l'alliage du noyau métallique. Par ailleurs, la surface de la pièce métallique en contact avec le noyau métallique ne nécessite pas ou peu d'usinage, ce qui est économiquement avantageux. On notera également que le coût de production d'un bord d'attaque est réduit vu que le même noyau peut être réutilisé plusieurs fois, par exemple au moins 10 fois.

Avantageusement, la pièce métallique est un bouclier de bord d'attaque d'une aube rotative.

### Brève description des dessins

L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :
- la figure 1 est une vue schématique en perspective d'un turboréacteur à double flux ;
- la figure 2 est une vue schématique en perspective d'une aube tournante de la soufflante du turboréacteur de la figure 1 ;
- la figure 3 est une vue schématique en perspective d'un bouclier de bord d'attaque de l'aube de la figure 2 ;
- la figure 4 est une vue en coupe transversale, suivant le plan IV-IV, du bouclier de la figure 3 ;
- les figures 5A à 5E illustrent des étapes successives d'un procédé de fabrication du bouclier de la figure 4 ;
- la figure 6 est une vue agrandie en coupe d'un noyau métallique ; et
- les figures 7A et 7B sont des graphiques représentant respectivement la concentration de carbone et d'azote à partir de la surface du noyau métallique.

### Description détaillée de l'invention

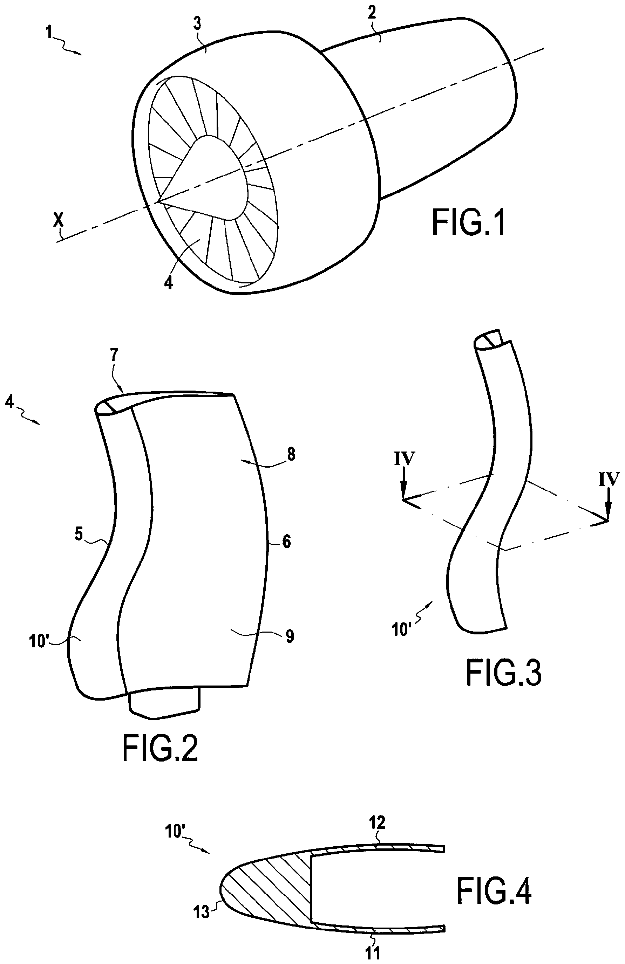

La figure 1 illustre un turboréacteur à double flux 1 comprenant un groupe générateur de gaz 2 et une soufflante 3. Cette soufflante 3 comprend une pluralité d'aubes tournantes 4, arrangées radialement autour d'un axe central X, et profilées aérodynamiquement de manière à impulser l'air par leur rotation. Ainsi, comme illustré sur la figure 2, chaque aube 4 présente un bord d'attaque 5, un bord de fuite 6, un extrados 7 et un intrados 8.

En fonctionnement normal, le vent relatif est sensiblement orienté vers le bord d'attaque 5 de chaque aube 4. Ainsi, ce bord d'attaque 5 est particulièrement exposé aux impacts. En particulier quand l'aube 4 comprend un corps 9 en matériau composite, notamment à matrice polymère renforcée par des fibres, il convient donc de protéger le bord d'attaque 5 avec un bouclier 10' intégré à chaque aube.

Les figures 3 et 4 illustrent ce bouclier 10' qui présente une ailette intrados 11, une ailette extrados 12 et une section centrale 13 plus épaisse, destinée à chevaucher le bord d'attaque de l'aube 4 et reliant l'ailette intrados 11 et l'ailette extrados 12. Les ailettes intrados et extrados 11, 12 assurent le positionnement du bouclier 10' sur l'aube 4. Le bouclier 10' est principalement métallique, et plus spécifiquement en alliage à base de titane, comme par exemple le TA6V (Ti-6Al-4V). Le bouclier 10' est donc un exemple de pièce métallique 10 en alliage à base de titane.

Comme l'on peut apprécier sur les figures 3 et 4, la forme de ce bouclier 10' peut être assez complexe, ce qui, combiné aux matériaux à hautes performances typiquement utilisés pour cette pièce, peut rendre sa fabrication coûteuse et difficile, en particulier lorsque le noyau traditionnellement utilisé pour la conformation à chaud du bord d'attaque ne peut être utilisé qu'une ou deux fois.

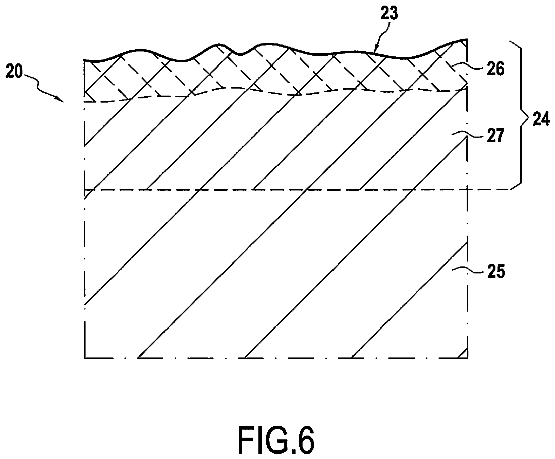

Le noyau métallique 20 est obtenu par formation du noyau et par carbonitruration d'une surface extérieure 23 du noyau métallique 20. Cette carbonitruration peut notamment être réalisée par formation d'un plasma de carbone et d'azote aussi appelée, carbonitruration ionique ou carbonitruration plasma. Cette technique réactive permet de faire diffuser le carbone et l'azote en profondeur dans le noyau métallique 20 et de créer en surface 23 du noyau métallique 20 une couche de matériau enrichi en carbonitrure métallique 24. Comme on peut le voir sur la figure 6, on obtient ainsi un noyau métallique 20 qui présente, sur la surface extérieure 23, une couche de matériau enrichi en carbonitrure métallique 24. Sous la couche de matériau enrichi en carbonitrure métallique 24, on retrouve la composition 25 de l'alliage à base de nickel ou de cobalt utilisée pour former le noyau métallique 20 avant le traitement de carbonitruration.

Comme cela est représenté sur la figure 6, la couche de matériau enrichi en carbonitrure métallique 24 peut comprendre une première couche 26 et une seconde couche 27, la première couche 26 comprenant une plus grande concentration de nitrure métallique que la seconde couche 27 et la seconde couche 27 étant séparée de la surface extérieure 23 du noyau métallique 20 par la première couche 26.

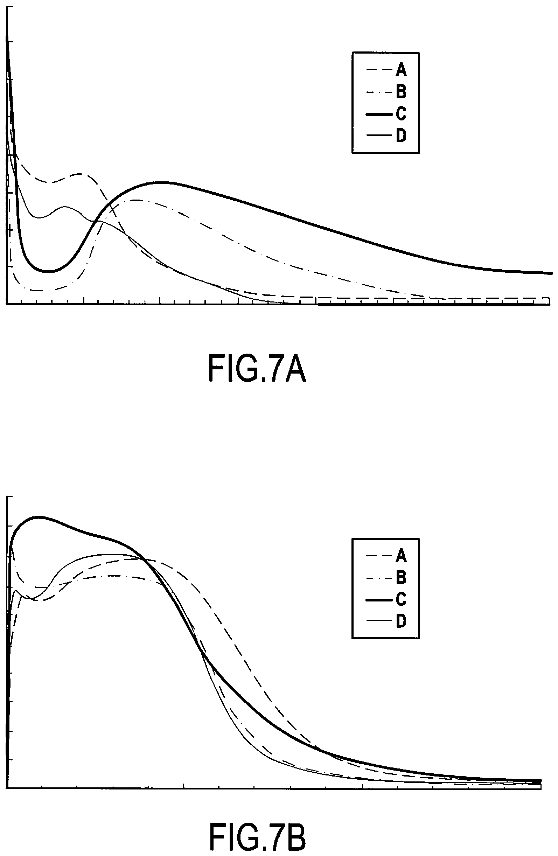

Les figures 7A et 7B représentent la concentration, respectivement, en carbone et en azote en partant de la surface extérieure 23 du noyau métallique 20 et en se déplaçant vers l'intérieur du noyau métallique 20 sensiblement perpendiculairement à la surface extérieure 23 et ce, pour différents alliages à base de nickel ou de cobalt (références A-D). On constate que l'azote est surtout présent dans la première couche 26 et que sa concentration baisse assez rapidement lorsque l'on se déplace à l'intérieur du noyau métallique 20. A l'exception de l'alliage A, la concentration en carbone est généralement plus faible dans la première couche 26 et tend à augmenter dans la seconde couche 27 avant de décroitre à nouveau lorsque l'on retrouve l'alliage 25 à base de nickel ou de cobalt utilisé pour former le noyau métallique 20 avant le traitement de carbonitruration.

On comprend que les concentrations en carbone et en azote des première et seconde couches 26, 27 évoluent de manière continue. La couche de matériau enrichi en carbonitrure métallique 24 comprend donc des nitrures métalliques, des carbures métalliques et/ou des carbonitrures métalliques. Toutefois, la première couche 26 ayant une concentration plus élevée en azote que la seconde couche 27, sa concentration en nitrure métallique (sous forme de nitrure et/ou de matériau à base de carbonitrure) est plus élevée que celle de la seconde couche 27.

La carbonitruration ionique peut par exemple être réalisée à 500°C pendant 150h. Ces conditions permettent d'obtenir une couche de matériau enrichi en carbonitrure dont l'épaisseur est comprise entre 20 et 30 µm. On peut également envisager de réaliser la carbonitruration ionique à 720°C pendant 150h.

Après avoir été soumis à plusieurs cycles thermiques de conformation à chaud, la couche de matériau enrichi en carbonitrure métallique 24 peut être endommagée. On peut alors régénérer la couche de matériau enrichi en carbonitrure métallique 24 du noyau métallique 20 en réalisant une nouvelle étape de carbonitruration du noyau métallique 20. On obtient ainsi une nouvelle couche de matériau enrichi en carbonitrure métallique 24.

La nouvelle étape de carbonitruration du noyau métallique 20 peut être réalisée directement sur le noyau métallique 20 dont la couche de matériau enrichi en carbonitrure métallique 24 est endommagée ou, on peut également réaliser un traitement thermique à température supérieure à la température de conformation à chaud afin d'ôter la couche de matériau enrichie en carbonitrure métallique 24 endommagée et réaliser ensuite la nouvelle étape de carbonitruration de la surface extérieure 23 du noyau métallique 20.

On peut ainsi réutiliser le noyau métallique 20 et lui faire subir plusieurs cycles de conformation à chaud. Le nombre de cycles de conformation à chaud subit par le noyau métallique 20 a ainsi été augmenté.

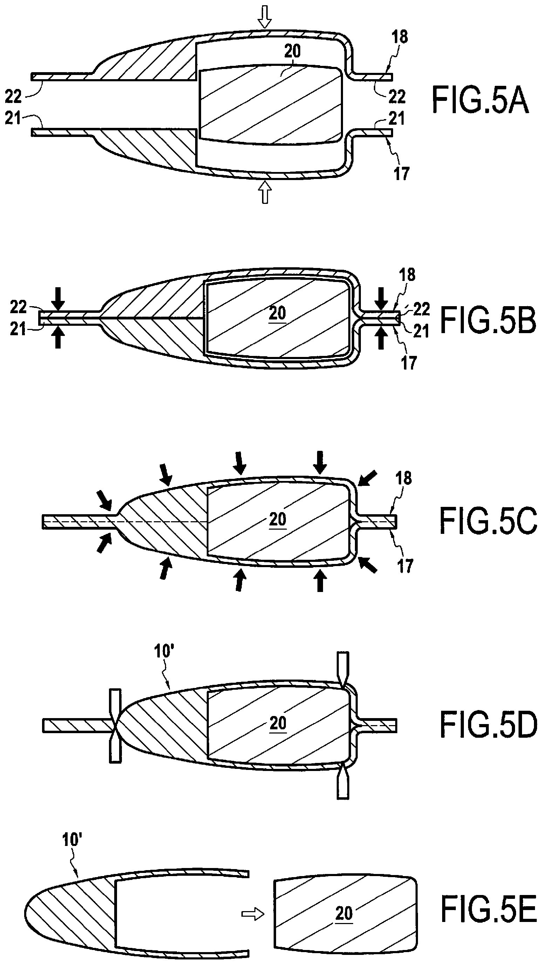

Le procédé de conformation à chaud d'une pièce métallique 10 en alliage à base de titane autour du noyau métallique 20 est illustrées au figures 5A à 5E. Il comprend les étapes de positionnement de la pièce métallique autour du noyau 20 (figures 5A et 5B), de conformation à chaud de la pièce métallique 10' autour du noyau métallique (figure 5C) et d'extraction du noyau métallique de la pièce métallique 10' (figures 5D et 5E). On notera que dans cet exemple, après conformation à chaud, la pièce métallique est découpées (figure 5D) afin de rendre l'extraction du noyau 20 possible (figure 5E). On obtient ainsi un bouclier de bord d'attaque 10' qui peut être positionné et attaché sur le bord d'attaque de l'aube.

On notera que le procédé de conformation à chaud de la pièce métallique 10 ne comporte pas d'étape d'usinage de la surface du bord d'attaque 5 destiné à être mis en contact avec l'aube.

En effet, lors de l'étape de conformation à chaud, il n'y a pas de collage et/ou de réaction chimique entre le noyau métallique 20 et la pièce métallique 10 car la pièce métallique 10 est en contact avec la couche de matériau enrichi en carbonitrure métallique 24 et non avec l'alliage 25 à base de nickel ou de cobalt formant le noyau métallique.

Par ailleurs, la couche de matériau enrichi en carbonitrure métallique 24 est inerte chimiquement et physiquement vis-à-vis de la pièce métallique 10. Cette couche 24, de par la dispersion de carbures et nitrures forme une barrière de diffusion entre l'alliage du noyau métallique 20 et l'alliage à base de titane de la pièce métallique 10. On limite ainsi la contamination de la pièce métallique 10 en alliage à base de titane par des éléments de l'alliage à base de nickel ou de cobalt du noyau métallique 20.

Ce procédé de conformation peut comprendre les étapes de fabrication du noyau métallique 20 ou les étapes de régénération du noyau métallique 20 décrites précédemment.

Quoique la présente invention ait été décrite en se référant à un exemple de réalisation spécifique, il est évident que des différentes modifications et changements peuvent être effectués sur ces exemples sans sortir de la portée générale de l'invention telle que définie par les revendications. Par exemple, l'invention n'est pas limitée aux boucliers de bords d'attaque d'aubes rotatives. En effet, le noyau métallique ainsi que les procédés de fabrication et de régénération peuvent être utilisés pour fabriquer toute autre pièce métallique en alliage à base de titane par conformation à chaud autour d'un noyau métallique tel que défini. En outre, des caractéristiques individuelles des différents modes de réalisation évoqués peuvent être combinées dans des modes de réalisation additionnels. Par conséquent, la description et les dessins doivent être considérés dans un sens illustratif plutôt que restrictif.

## Revendications

1. Noyau métallique (20) pour conformation à chaud d'une pièce métallique (10 ; 10') en alliage à base de titane, comprenant un alliage (25) à base de nickel ou de cobalt, l'alliage (25) à base de nickel ou de cobalt comprenant du chrome, du molybdène et/ou du titane **caractérisé en ce que** le noyau métallique (20) présente en outre sur une surface extérieure (23), destinée à venir en contact avec la pièce métallique (10 ; 10'), une couche comprenant un matériau enrichi en carbonitrure métallique (24) par rapport audit alliage (25).

2. Noyau métallique (20) selon la revendication 1, dans lequel la couche de matériau enrichi en carbonitrure métallique (24) comprend une première couche (26) et une seconde couche (27), la première couche (26) comprenant une plus grande concentration de nitrure métallique que la seconde couche (27) et la seconde couche (27) étant séparée de la surface extérieure (23) du noyau métallique (20) par la première couche (26).

3. Noyau métallique (20) selon la revendication 1 ou 2, dans lequel la couche de matériau enrichi en carbonitrure métallique (24) présente une épaisseur d'au moins 20 µm, de préférence d'au moins 30 µm.

4. Procédé de fabrication d'un noyau métallique (20) selon l'une quelconque des revendications 1 à 3, comprenant les étapes suivantes :
- fabrication du noyau métallique (20) ; et
- carbonitruration de la surface extérieure (23) du noyau métallique (20) de sorte à obtenir une couche de matériau enrichi en carbonitrure métallique (24).

5. Procédé de fabrication selon la revendication 4, dans lequel la carbonitruration de la surface extérieure (23) du noyau métallique (20) est réalisée par formation d'un plasma de carbone et d'azote.

6. Procédé de régénération d'un noyau métallique (20) selon l'une quelconque des revendications 1 à 3, dans lequel on réalise une nouvelle étape de carbonitruration de la surface extérieure (23) du noyau métallique (20), de sorte à obtenir une nouvelle couche de matériau enrichi en carbonitrure métallique (24).

7. Procédé de régénération selon la revendication 5, dans lequel, avant la nouvelle étape de carbonitruration de la surface extérieure (23) du noyau métallique (20), on réalise une étape d'élimination de la couche de matériau enrichi en carbonitrure métallique (24) par traitement thermique.

8. Procédé de conformation à chaud d'une pièce métallique (10 ; 10') en alliage à base de titane, comprenant les étapes suivantes :
- positionnement de la pièce métallique (10 ; 10') autour d'un noyau métallique (20) selon l'une quelconque des revendications 1 à 3 ;
- conformation à chaud de la pièce métallique (10 ; 10') autour du noyau métallique (20) ; et
- extraction du noyau métallique (20).

9. Procédé de conformation selon la revendication 8, dans lequel la pièce métallique (10) est un bouclier de bord d'attaque (10') d'une aube rotative.

## Patentansprüche

1. Metallkern (20) zum Warmformen eines Metallteils (10; 10') aus einer Legierung auf Titanbasis, umfassend eine Legierung (25) auf Nickel- oder Kobaltbasis, wobei die Legierung (25) auf Nickel- oder Kobaltbasis Chrom, Molybdän und/oder Titan umfasst, **dadurch gekennzeichnet, dass** der Metallkern (20) ferner auf einer Außenfläche (23), welche dazu bestimmt ist, mit dem Metallteil (10; 10') in Kontakt zu kommen, eine Schicht mit einem gegenüber der Legierung (25) mit metallischem Carbonitrid (24) angereicherten Material aufweist.

2. Metallkern (20) nach Anspruch 1, wobei die Schicht aus mit metallischem Carbonitrid (24) angereicherten Material eine erste Schicht (26) und eine zweite Schicht (27) umfasst, wobei die erste Schicht (26) eine höhere Konzentration an Metallnitrid als die zweite Schicht (27) umfasst, und wobei zweite Schicht (27) von der Außenfläche (23) des Metallkerns (20) durch die erste Schicht (26) getrennt ist.

3. Metallkern (20) nach Anspruch 1 oder 2, bei dem die Schicht aus mit metallischem Carbonitrid (24) angereichertem Material eine Dicke von wenigstens 20 µm, vorzugsweise von wenigstens 30 µm aufweist.

4. Verfahren zur Herstellung eines Metallkerns (20) nach einem der Ansprüche 1 bis 3, umfassend die folgenden Schritte:
- Herstellen des Metallkerns (20), und
- Carbonitrieren der Außenfläche (23) des Metallkerns (20), um eine Schicht aus mit metallischem Carbonitrid (24) angereichertem Material zu erhalten.

5. Herstellungsverfahren nach Anspruch 4, wobei das Carbonitrieren der Außenfläche (23) des Metallkerns (20) durch Bildung eines Plasmas aus Kohlenstoff und Stickstoff durchgeführt wird.

6. Verfahren zum Regenerieren eines Metallkerns (20) nach einem der Ansprüche 1 bis 3, bei dem ein neuer Schritt eines Carbonitrierens der Außenfläche (23) des Metallkerns (20) durchgeführt wird, um eine neue Schicht aus mit metallischem Carbonitrid (24) angereichertem Material zu erhalten.

7. Regenerierungsverfahren nach Anspruch 5, bei dem vor dem neuen Schritt des Carbonitrierens der Außenfläche (23) des Metallkerns (20) ein Schritt zum Entfernen der Schicht aus mit metallischem Carbonitrid (24) angereichertem Material mittels Wärmebehandlung durchgeführt wird.

8. Verfahren zum Warmformen eines Metallteils (10; 10') aus einer Legierung auf Titanbasis, umfassend die folgenden Schritte:
- Positionieren des Metallteils (10; 10') um einen Metallkern (20) nach einem der Ansprüche 1 bis 3,
- Warmformen des Metallteils (10; 10 ') um den Metallkern (20), und
- Herausnehmen des Metallkerns (20).

9. Formungsverfahren nach Anspruch 8, bei dem das Metallteil (10) ein Vorderkantenschutzschild (10') einer Laufschaufel ist.

## Claims

1. A metal core (20) for hot-shaping a metal part (10; 10') made out of titanium-based alloy, comprising an alloy (25) based on nickel or on cobalt, nickel- or cobalt-based alloy (25) including chromium, molybdenum, and/or titanium, and **characterized in that** the metal core (20) also presents on an outside surface (23) that is to come into contact with the metal part (10; 10'), a layer (24) comprising a material that is enriched in metallic carbonitride relative to said alloy (25).

2. A metal core (20) according to claim 1, wherein the layer (24) of material enriched in metallic carbonitride comprises a first layer (26) and a second layer (27), the first layer (26) having a greater concentration of metallic nitride than the second layer (27), and the second layer (27) being separated from the outside surface (23) of the metal core (20) by the first layer (26) .

3. A metal core (20) according to claim 1 or claim 2, wherein the layer (24) of material enriched in metallic carbonitride presents a thickness of at least 20 µm, preferably of at least 30 µm.

4. A fabrication method for fabricating a metal core (20) according to any one of claims 1 to 3, comprising the following steps:
- fabricating the metal core (20); and
- carbonitriding the outside surface (23) of the metal core (20) in such a manner as to obtain a layer (24) of material enriched in metallic carbonitride.

5. A fabrication method according to claim 4, wherein the outside surface (23) of the metal core (20) is carbonitrided by forming a plasma of carbon and of nitrogen.

6. A regeneration method for regenerating a metal core (20) according to any one of claims 1 to 3, wherein a new step of carbonitriding the outside surface (23) of the metal core (20) is performed so as to obtain a new layer (24) of material enriched in metallic carbonitride.

7. A regeneration method according to claim 5, wherein, prior to the new step of carbonitriding the outside surface (23) of the metal core (20), a step is performed of using heat treatment to eliminate the layer (24) of material enriched in metallic carbonitride.

8. A shaping method for hot-shaping a metal part (10; 10') made out of titanium-based alloy, comprising the following steps:
- positioning the metal part (10; 10') around a metal core (20) according to any one of claims 1 to 3;
- hot-shaping the metal part (10; 10') around the metal core (20); and
- extracting the metal core (20).

9. A shaping method according to claim 8, wherein the metal part (10) is a leading edge shield (10') of a rotary blade.
